# EUROPEAN PATENT APPLICATION

(11) **EP 3 648 096 A1**
(43) Date of publication of application: **06.05.2020**
(21) Application number: 18823650.9
(22) Date of filing: 27.06.2018
(51) Int. Cl.: G09G 5/00, B60K 35/00, G02B 27/01, G09G 5/36, H04N 5/64, H04N 7/18

(54) **IMAGE PROCESSING UNIT, AND HEAD-UP DISPLAY DEVICE PROVIDED WITH SAME**

(30) Priority: 28.06.2017 JP 2017126062; 23.08.2017 JP 2017160527
(71) Applicant: Nippon Seiki Co., Ltd., Nagaoka-shi, Niigata 940-8580 (JP)
(72) Inventor: HADA, Makoto, Nagaoka, Niigata (JP); MASUYA, Yuki, Nagaoka, Niigata (JP)
(74) Representative: Jackson, Richard Eric
(86) International application number: PCT/JP2018/024267
(87) International publication number: WO 2019/004237

(57) **Abstract**

The purpose of the present invention is to improve visibility of a virtual image. For example, an image processing unit to be applied to a display controller 200 is provided with a generation unit 230 for generating a display image including a display element corresponding to a virtual image V1 viewed by a user. The generation unit 230 determines the planar shape of the display element such that a size of the virtual image V1 viewed by the user changes on the basis of the viewpoint height of the user. Specifically, when the viewpoint height changes from a reference position THa to a position Normal or Short lower than the reference position THa, the generation unit 230 determines the planar shape of an enlarged display element. For example, the planar shapes S1, S2', S3', and S4 of the virtual image V1 in a real space viewed by the user extend in the front direction and the rear direction.

## Description

### TECHNICAL FIELD

The present invention relates to an image processing unit capable of generating a display image based on a viewpoint position of a user, and a head-up display device including the same.

### BACKGROUND ART

For example, the head-up display device disclosed in Patent Document 1 can recognize a lane marking such as a white line on a road ahead of a vehicle, and can project or display a display image corresponding to a virtual image on the windshield of the vehicle so that the lane marking (actual scenery) and the virtual image overlap each other. In particular, the head-up display device of Patent Document 1 is associated with a driving support device such as a lane departure warning system (LDW system) and a lane keeping assist system (LKA system), and displays the virtual image indicating that the driving support device is active. Specifically, as shown in, for example, Fig. 3 and Fig. 4 of Patent Document 1, the virtual image is visually recognized by a user (driver) as display elements M1, M2, M3, M4, M5 and M6 inclined to the side of the vehicle.

### PRIOR ART DOCUMENT

### PATENT DOCUMENT

Patent Document 1: Japanese Unexamined Patent Application Publication No. 2016-110627

### SUMMARY OF THE INVENTION

### PROBLEMS TO BE SOLVED BY THE INVENTION

According to the paragraph [0018] of Patent Document 1, the face image of the driver photographed by an in-vehicle camera is analyzed to calculate the eyeball position (viewpoint position) of the driver. Then, the projection positions of the display elements M1 to M6 are adjusted so that the display elements M1 to M6 are visually recognized by being superimposed on lane markings R1 to R6, according to the viewpoint position obtained by the analysis. However, when the viewpoint position becomes low, the present inventors have recognized that it is difficult for the user to visually recognize the virtual image, that is, the visibility is lowered.

It is an object of the present invention to provide an image processing unit capable of improving the visibility of a virtual image, and a head-up display device including the same. Other objects of the present invention will become apparent to those skilled in the art upon reference to the following aspects and best mode embodiments, as well as the accompanying drawings.

### SOLUTION TO PROBLEM

Hereinafter, in order to provide an easy understanding of the summary of the present invention, embodiments according to the present invention will now be illustrated.

In a first aspect, an image processing unit includes a generation unit configured to generate a display image including a display element corresponding to a virtual image visually recognized by a user, the generation unit determines a planar shape of the display element so that a size of the virtual image visually recognized by the user changes based on a viewpoint height of the user, and the generation unit determines the planar shape of the display element which is enlarged when the viewpoint height changes from a reference position to a position lower than the reference position.

In the first aspect, the planar shape of the display element is enlarged when the viewpoint height becomes low. Therefore, the size of the virtual image in the display element increases by an amount corresponding to the enlargement, and the visibility can be improved.

In a second aspect depending on the first aspect, a forward direction of a vehicle including a projection target member on which the virtual image is projected is a front direction, a reverse direction of the vehicle is a rear direction, and the generation unit may determine the planar shape of the display element which is enlarged so that a planar shape of the virtual image in a real space visually recognized by the user or a planar shape on a virtual plane on which the planar shape of the virtual image is mapped extends in the front direction and / or the rear direction.

In the second aspect, when the viewpoint height becomes low, the planar shape of the virtual image in the real space visually recognized by the user or the planar shape on the virtual plane on which the planar shape of the virtual image is mapped extends in the front-rear directions, thereby being capable of improving the visibility.

In a third aspect depending on the first aspect, the generation unit may determine the planar shape of the display element which is enlarged so that a planar shape of the virtual image in a real space visually recognized by the user or a planar shape on a virtual plane on which the planar shape of the virtual image is mapped extends in a first predetermined direction and / or a second predetermined direction.

In the third aspect, when the viewpoint height becomes low, the planar shape of the virtual image in the real space visually recognized by the user or the planar shape on the virtual plane on which the planar shape of the virtual image is mapped extends in the first predetermined direction and / or the second predetermined direction, thereby being capable of improving the visibility.

In a fourth aspect depending on the third aspect, the first predetermined direction may be a direction in which the planar shape of the virtual image in the real space visually recognized by the user or the planar shape on the virtual plane on which the planar shape of the virtual image is mapped approaches a vehicle including a projection target member on which the virtual image is projected, and the second predetermined direction may be a direction in which the planar shape of the virtual image in the real space visually recognized by the user or the planar shape on the virtual plane on which the planar shape of the virtual image is mapped moves away from the vehicle.

In the fourth aspect, when the viewpoint height becomes low, the planar shape of the virtual image in the real space visually recognized by the user or the planar shape on the virtual plane on which the planar shape of the virtual image is mapped is enlarged in a direction approaching the user (driver), thereby being capable of effectively improving the visibility. Alternatively or in addition, in the fourth aspect, when the viewpoint height becomes low, the planar shape of the virtual image in the real space visually recognized by the user or the planar shape on the virtual plane on which the planar shape of the virtual image is mapped is enlarged in a direction away from the user (driver), thereby being capable of effectively improving the visibility.

In a fifth aspect depending on any one of the first to fourth aspects, the generation unit dynamically may determine an enlargement ratio of the planar shape of the display element responsive to a change in the viewpoint height.

In the fifth aspect, when the viewpoint height changes, the visibility can be improved in response to the change.

In a sixth aspect depending on the fifth aspect, the generation unit may have less brightness of the display or disable the display of the planar shape of the display element which is enlarged when the amount of the change in the viewpoint height per unit time is greater than or equal to a reference value.

In the sixth aspect, when the change in viewpoint height is large, it is possible to stop the improvement of visibility.

In a seventh aspect depending on the fifth aspect or the sixth aspect, the generation unit may determine the planar shape of the display element that is not enlarged so that the enlargement ratio of the planar shape of the display element is 1 only when the line-of-sight direction of the user is directed toward the virtual image.

In the seventh aspect, the improvement in visibility can be stopped only when the line-of-sight direction of the user is directed toward the display element (virtual image). In other words, the user cannot view the enlargement of the planar shape on the virtual image in the real space visually recognized by the user or the planar shape on the virtual plane on which the planar shape of the virtual image is mapped. Therefore, it is possible to avoid presenting incorrect information to the user.

In an eighth aspect depending on any one of the fifth to seventh aspects, the user may be informed that the enlargement ratio has occurred as the viewpoint height decreases when the enlargement ratio of the planar shape of the display element is greater than 1.

In the eighth aspect, it is possible to notify the movement of the virtual image corresponding to the viewpoint height of the user.

In a ninth aspect depending on any one of the first to fourth aspects, the viewpoint height may be a fixed value acquired when the vehicle is started, and the generation unit may determine an enlargement ratio of the planar shape of the display element based on the fixed value.

In the ninth aspect, the viewpoint height (fixed value) acquired at the time of starting the vehicle allows to improve the visibility during driving of the vehicle.

In a tenth aspect depending on any one of the first to ninth aspects, the generation unit may determine the planar shape of the display element so that the planar shape of the virtual image in the real space visually recognized by the user or the planar shape on the virtual plane on which the planar shape of the virtual image is mapped remains the same when the viewpoint height changes from the reference position to a position higher than the reference position.

In the tenth aspect, when the viewpoint height increases, the planar shape of the virtual image in the real space visually recognized by the user or the planar shape on the virtual plane on which the planar shape of the virtual image is mapped may remain the same. In other words, even though the planar shape of the virtual image in the real space visually recognized by the user or the planar shape on the virtual plane on which the planar shape of the virtual image is mapped does not extend in the front-rear direction, the visibility does not deteriorate.

In an eleventh aspect, a head-up display device includes the image processing unit according to any one of the first to ten aspects, and a display configured to display the display image generated by the image processing unit.

In the eleventh aspect, the head-up display device can display the display image that includes the display element with the enlarged planar shape when the viewpoint height becomes low. Therefore, the size of the virtual image of the display element is increased by an amount corresponding to the enlargement, and the visibility can be improved.

Those skilled in the art will readily understand that the illustrated embodiments according to the present invention can be further modified without departing from the spirit of the present invention.

### BRIEF DESCRIPTION OF THE DRAWINGS

Fig. 1(A) shows an example of a schematic configuration of an image processing unit and a head-up display device including the same according to the present invention, and Fig. 1(B) shows an explanatory diagram of a virtual image display surface and a virtual plane in Fig. 1(A).
Fig. 2(B) shows a modification example of the virtual image display surface in Fig. 1(A), and Fig. 2(B) shows an explanatory view of a virtual image display surface and a virtual plane in Fig. 2(A).
Fig. 3(A) shows an example of an object recognized through a windshield (actual scenery), Fig. 3(B) shows an example of a virtual image (display element) superimposed on the object in Fig. 3(A), and Fig. 3(C) shows an explanatory diagram (plan view) of a planar shape of a virtual image in a real space or a planar shape on a virtual plane.
Fig. 4(A) shows an example of a virtual image recognized by a user, Fig. 4(B) shows an example of a change in the size of the virtual image visually recognized by a user when the viewpoint height of the user becomes low, Fig. 4(C) shows an example of an increased virtual image, and Fig. 4(D) shows an explanatory diagram (plan view) of a planar shape of an enlarged virtual image in a real space or a planar shape on a virtual plane.
Fig. 5(A) shows a plurality of examples for setting the enlargement ratio of a planar shape of a virtual image in a real space or a planar shape on a virtual plane based on the viewpoint height of an user, and Fig. 5(B) shows an example for setting the enlargement ratio of a planar shape of a virtual image in a real space or a planar shape on a virtual plane based on the distance to a vehicle.
Fig. 6(A) shows an example of a virtual image recognized by a user when the viewpoint height of the user becomes low, and Fig. 6(B) shows an explanatory diagram of a planar shape of the virtual image or a planar shape on a virtual plane in Fig. 6(A) in the side view.
Fig. 7(A) shows an example of an enlarged virtual image recognized by a user when the viewpoint height of the user becomes low, and Fig. 7(B) shows an explanatory diagram of a planar shape of the virtual image or a planar shape on a virtual plane in Fig. 7(A) in the side view.
Fig. 8(A) shows a modification example of the virtual image in Fig. 7(A), and Fig. 8(B) shows an explanatory diagram of a planar shape of the virtual image or a planar shape on a virtual plane in Fig. 8(A) in the side view.
Figs. 9(A) and 9(C) show another modification example of the virtual image in Fig. 7(A) respectively, and Fig. 9(B) shows an explanatory diagram of a planar shape of the virtual image or a planar shape on a virtual plane in Fig. 9(A) in the side view.
Fig. 10(A) shows an explanatory diagram of the positional relationship between an object (vehicle ahead) and a host vehicle, and Fig. 10(B) is an explanatory diagram of an example of setting a predetermined direction.

### MODE FOR CARRYING OUT THE INVENTION

The best mode described below is used to facilitate the understanding of the present invention. Therefore, one skilled in the art should be aware that the invention is not unduly limited by the embodiments described below.

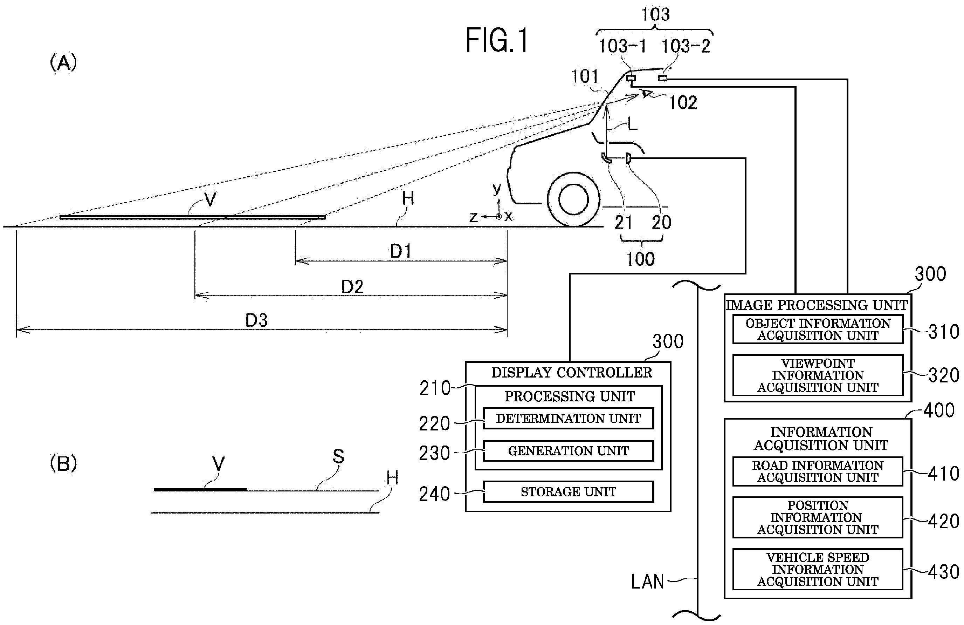

Fig. 1(A) shows an example of a schematic configuration of a head-up display device (or a head-up display system) including an image processing unit according to the present invention. As shown in Fig. 1(A), the head-up display system can include, for example, an imaging device 103, an image processor 300 that processes a captured image from the imaging device 103, a display controller 200 for processing a display image to a display 20 based on information from the image processor 300 and controlling the display 20 based on the display image, and a display mechanism 100 including the display 20 and a reflector 21, for example. Note that a processing unit 210 of the display controller 200 in Fig. 1(A) does not necessarily have a function of controlling the display 20, and the function may be implemented by another device (not shown) or by the display 20 or the image processor 300 shown in the figure, for example.

In the present specification, an apparatus including the function of a generation unit 230 that generates the display image including a display element corresponding to a virtual image visually recognized by a user may be referred to as the image processing unit in accordance with the present invention. As an example, since the generation unit 230 is applied to the display controller 200 in Fig. 1(A), the display controller 200 including the generation unit 230 is the image processing unit. The image processing unit has essentially the function of processing the display image (generation unit 230), but may further include the function of processing the captured image (object information acquisition unit 310 and / or viewpoint information acquisition unit 320). In other words, when the image processor 300 has the function of the generation unit 230 that generates the display image including the display element, the image processor 300 may be referred to as the image processing unit in accordance with the present invention.

Further, an apparatus including the image processing unit according to the present invention (for example, the display controller 200 in Fig. 1(A) and the display 20 for displaying the display image produced by the image processing unit may be referred to as the head-up display device according to the present invention.

In Fig. 1(A), the imaging device 103 includes, as an example, a first imaging unit 103-1 capable of capturing a road (actual scenery on the road) existing in front of the vehicle, for example, and a second imaging unit 103-2 capable of capturing the face of a user, for example, a driver. The display mechanism 100 can project a display image (including a display element) onto a display range AR (a projection target member) which is set in such as a part of the windshield 101 of the vehicle, to display the display image in the display range AR so that the virtual image on a virtual image display surface V of the display element overlaps with the actual scenery (for example, vehicle ahead) at the viewpoint 102 of the driver of the vehicle. Although the display mechanism 100 and the display controller 200 are typically housed within the dashboard, a part of the display mechanism 100 and the display controller 200 may be disposed outside the dashboard. Note that the display 20 may be referred to as a projector because the display 20 projects a display element or a display image onto the windshield 101, for example.

The image processing unit 300 in Fig. 1(A) can include the object information acquisition unit 310, which can analyze the captured image from the first imaging unit 103-1, and recognize an object such as a vehicle ahead, a pedestrian and a white line that is superimposed on the display element from the captured image. Preferably, the object information acquisition unit 310 can acquire position information of the recognized object (for example, a relative three-dimensional position in the real space when the host vehicle is used as a reference), and more preferably, acquire the size of the recognized object (for example, the volume of the object in the real space). The first imaging unit 103-1 is a stereo camera, for example, and the object information acquisition unit 310 can acquire the distance between the object and the vehicle (host vehicle) (the relative distance from the host vehicle to the object), the position of the object on a road surface H (horizontal plane) and the vehicle (host vehicle) (the relative distance from the host vehicle to the object), and the length of three sides that define the cuboid surrounding the object (width, depth and height of the object), from the left and right captured images.

The image processing unit 300 in Fig. 1(A) can include the viewpoint information acquisition unit 320 that can analyze the captured image from the second imaging unit 103-2 and recognize the driver's eyes from the captured image. Preferably, the viewpoint information acquisition unit 320 can acquire the recognized eye position information (for example, a relative one-dimensional position in the real space when the interior ceiling, the floor, or a predetermined position between the ceiling and the floor of the host vehicle is used as a reference (viewpoint height)), and more preferably, acquire the recognized eye direction (gaze direction).

The imaging device 103 is disposed, for example, in the vicinity of an inner rearview mirror (back mirror) not shown. As an example, the first imaging unit 103-1 is positioned on the inner rearview mirror at the side of the windshield 101, and the second imaging unit 103-2 is positioned on the inner rearview mirror at the side of the driver's seat (not shown).

The display controller 200 in Fig. 1(A) includes the processing unit 210. The processing unit 210 includes the generation unit 230, and may preferably further include, for example, a determination unit 220. The processing unit 210 or the determination unit 220 can determine whether the viewpoint 102 of the driver acquired by the viewpoint information acquisition unit 320 changes in the vertical direction. Further, the determination unit 220 can determine whether the change is large when the viewpoint height changes. In addition, the determination unit 220 can determine whether the line-of-sight direction of the driver acquired by the viewpoint information acquisition unit 320 is directed toward the display element.

The processing unit 210 or the generation unit 230 then generates a display image including the display element corresponding to the virtual image visually recognized by the user, and preferably, generates a display image including the display element so that the virtual image of the display element is overlapped with the actual scenery (for example, the vehicle ahead acquired by the object information acquisition unit 310) at the viewpoint 102 of the driver of the vehicle.

Specifically, the generation unit 230 can determine the position information and the size of the display element based on the viewpoint height of the user, for example, the driver and the position information of a recognized object, for example, the vehicle ahead, for example. More specifically, the generation unit 230 determines the planar shape of the display element when the display element is visually recognized by the user, so that the virtual image corresponding to the display element has a planar shape on the real space, and the planar shape of the virtual image in the real space remains the same as the planar shape of the display element without relying on the viewpoint height of the user. In other words, for example, when the size of the vehicle ahead (actual scenery) visually recognized by the user changes according to the viewpoint height of the user, the generation unit 230 determines the planar shape of the display element according to the viewpoint height of the user so that the change in the size of the display element superimposed on the vehicle ahead becomes equal to the change in the size of the vehicle ahead. That is, the generation unit 230 determines the position and the appearance shape of the display element in the display image according to the viewpoint height of the user, so that the relative positional relationship in the real space that is visually recognized by the user, for example, between the vehicle ahead (actual scenery) and the display element, and the size relationship in the real space do not change regardless of the viewpoint height of the user.

The present inventors have recognized that the visibility of the virtual image decreases when the viewpoint height of the user becomes low. Although the details will be described later, after determining the planar shape of the display element according to the viewpoint height of the user, when the viewpoint height of the user becomes low, the generation unit 230 is characterized by enlarging the planar shape of the display element in order to improve the visibility. Therefore, the size of the virtual image in the display element increases by an amount corresponding to the enlargement.

The display controller 200 in Fig. 1(A) further includes, for example, a storage unit 240, which can store various data necessary for processing or calculation of the processing unit 210 such as the determination unit 220 and the generation unit 230, for example. The display controller 200 typically includes a microcomputer, for example, and can include a CPU, a memory such as a ROM and a RAM, an input and output interface, and the like. The processing unit 210 typically includes a CPU and a RAM (work area), and the storage unit 240 is typically configured by a ROM (for example, an EEPROM). For example, the ROM may store a program for the CPU to execute a predetermined operation (a method for generating a display image based on the viewpoint 102 of the user), and the RAM may form a work area for the CPU. The ROM may further store data necessary for determining or computing the shape of the display element, for example.

The display controller 200 is disposed or mounted on the vehicle, and is connected to, for example, the image processing unit 300 or the like via an in-vehicle network local area network (LAN), which is a controller area network (CAN). The display controller 200 may generally be called an electronic control unit (ECU).

The display controller 200 in Fig. 1(A) may input information from an information acquisition unit 400, for example, and generate a display image including the display element corresponding to the virtual image visually recognized by the user based on the information. Specifically, the processing unit 210 or the generation unit 230 may input information regarding the gradient of the road surface H based on the position (for example, the current position) of the vehicle (host vehicle) via, for example, the in-vehicle network LAN, a road information acquisition unit 410, and a position information acquisition unit 420.

Note that the projection position of the display element generated based on the information from the information acquisition unit 400 may be fixed to a part of the display range AR set on the windshield 101, and does not have to be superimposed on a predetermined object (actual scenery). For example, when sign information is included in the road information, a road sign based on the current position may be input to the generation unit 230, and the display element representing the road sign may be fixed and displayed in a part of the display range AR set in the windshield 101.

Further, the processing unit 210 or the generation unit 230 may input the speed of the vehicle (host vehicle) via the in-vehicle network LAN and the vehicle speed information acquisition unit 430, for example. The speed of the vehicle (host vehicle) based on the current time may be input to the generation unit 230, and the display element indicating the speed of the vehicle may be fixed and displayed in a part of the display range AR set in the windshield 101. In other words, when displaying a display image, regardless of the position of a predetermined object (actual scenery), the head-up display device may fix instrument information such as the speed of the vehicle, and may change obstacle information such as the vehicle ahead and the pedestrian according to the position of a predetermined object (actual scenery) [θ]. It is noted that the display controller 200 may not necessarily input information from the information acquisition unit 400 such as the road information acquisition unit 410, the position information acquisition unit 420, and the vehicle speed information acquisition unit 430.

In Fig. 1(A), the display mechanism 100 or the display 20 is controlled by the display controller 200 or the processing unit 210 so that the user can visually recognize the virtual image on the virtual image display surface V through the windshield 101. Therefore, the display 20 can generate or emit display light L (projection light) based on the display image including the display element corresponding to the virtual image. The reflector 21 guides the optical path of the display light L from the display 20 to the windshield 101, and the driver can recognize the display light L (display element) on the windshield 101 as the virtual image. The display 20 includes a light source unit such as an LED, a display element such as a DMD, a screen that receives light from the display element and displays the display image (including the display element), and the like.

The vehicle (host vehicle), which is mounted with the head-up display device including the display controller 200 unit and the display mechanism 100 which are the image processing unit is an automobile in Fig. 1(A), for example, and the automobile is capable of traveling on the road surface H. The height or depth (superimposition distance) of the virtual image display surface V in Fig. 1(A) is set to, for example, a predetermined distance from a distance D1 to a distance D3, at the viewpoint 102 of the driver. In other words, at the viewpoint 102 of the driver, the lower end of the virtual image display surface V is located forward by the distance D1 from the vehicle, the upper end of the virtual image display surface V is located forward by the distance D3 from the vehicle, and the middle point in the vertical direction of the virtual image display surface V is located forward by a distance D2 from the vehicle. The distance D1, the distance D2 and the distance D3 are, for example, 20 meter, for example 30 meter, for example, and 50 meter, for example, respectively.

In Fig. 1(A), the reflector 21 is shown with one reflector, but the reflector 21 may be shown with, for example, two reflectors. In other words, the optical path length of the display light L from the display 20 to the windshield 101 may be set by the reflector 21. Furthermore, the distance D1, the distance D2, and the distance D3 may be set according to the viewpoint height of an ideal driver (the sitting height of the ideal driver) and the optical path length of the display light L. Moreover, the reflector 21 can generally expand the display light L from the display 20. Further, the reflector 21 or the display controller 200 (for example, the processing unit 210) can generally correct distortion in the display range AR set in a part of the windshield 101 (for example, distortion of the glass surface).

Fig. 1(B) is an explanatory diagram of a virtual image display surface and a virtual plane of Fig. 1(A). The virtual image of the display element is recognized on the virtual image display surface V raised from the road surface H by a predetermined height, for example. The virtual image display surface V is set to a virtual plane S raised from the road surface H by a predetermined height, for example. Note that the virtual image display surface V is not necessarily set parallel to the road surface H, and may be inclined from the road surface H by a predetermined angle. The inclination of the virtual image display surface V is set by the angle of the screen (display surface on which the display 20 displays the display image) or the angle of the reflector 21.

An actuator (not shown) capable of rotating and driving the reflector 21 may be provided in the reflector 21, and in this case, the processing unit 210 in the display controller 200 may control the actuator to adjust the inclination of the virtual image display surface V In the example shown in Fig. 1(A) or Fig. 1(B), the virtual image display surface V is substantially parallel to the road surface H, and the inclination of the virtual image display surface V from the road surface H may be set in a range from 0 (zero) degrees to 30 degrees, as an example.

In Fig. 1(A) or Fig. 1(B), the virtual image display surface V is raised from the road surface H by the predetermined height, but may be set to the road surface H. Also, although the virtual plane S is raised from the road surface H by the predetermined height, the virtual plane S may be set to the road surface H.

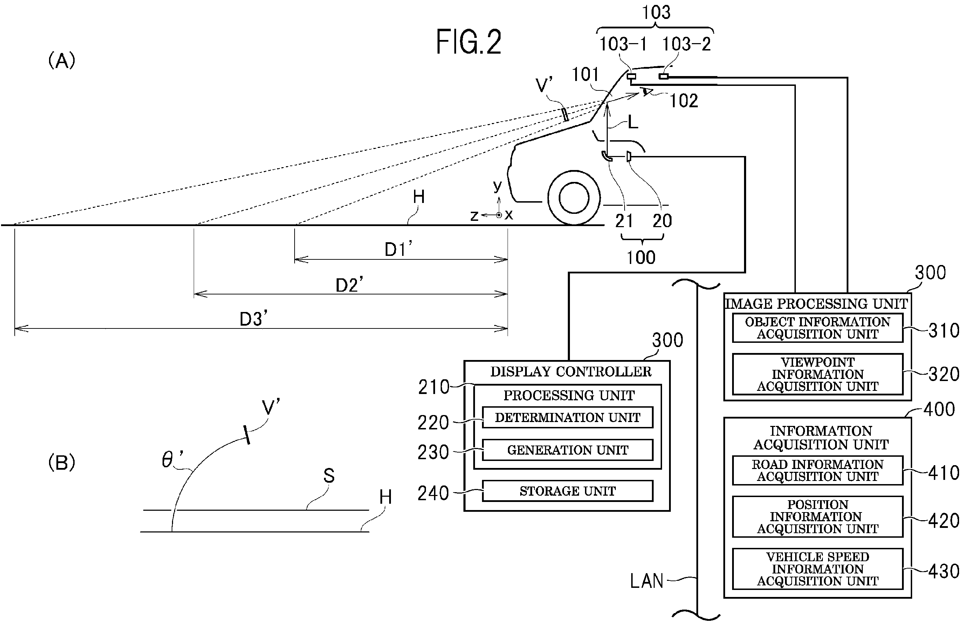

Fig. 2(B) shows a modification example of the virtual image display surface of Fig. 1(A), and Fig. 2(B) shows an explanatory view of a virtual image display surface and a virtual plane in Fig. 2(A). In the example shown in Fig. 2(A) or Fig. 2(B), a virtual image display surface V' is substantially perpendicular to the road surface H, and the inclination θ' of the virtual image display surface V from the road surface H may be set in a range from 80 degrees to 90 degrees, as an example. In Fig. 2(A), the range of the actual scenery superimposed by the virtual image on the virtual image display surface V' at the viewpoint 102 of the driver (superimposed distance) is set to a predetermined distance from the distance D1' to the distance D3', for example. Note that the optical path length of the display light L and the angle of the reflector 21 may be set so that the distance D1', the distance D2' and the distance D3' in Fig. 2(A) are the same as the distance D1, the distance D2 and the distance D3 in Fig. 1(A), respectively. In addition, although the virtual plane S in Fig. 2(A) is raised from the road surface H by the predetermined height, the virtual plane S may be set to the road surface H.

It is noted that the virtual image display surface is not limited to the virtual image display surface V in Fig. 1(A) or the virtual image display surface V' in Fig. 2(A), and may be a combination of a plurality of virtual image display surfaces as disclosed in Japanese Unexamined Patent Application Publication No. 2014-181025, Japanese Unexamined Patent Application Publication No. 2016-068576 or Japanese Unexamined Patent Application Publication No. 2016-212338, for example. In other words, the virtual image display surface may be set to any plane in the real space, or may be a virtual image display surface of a so-called 3D head-up display device.

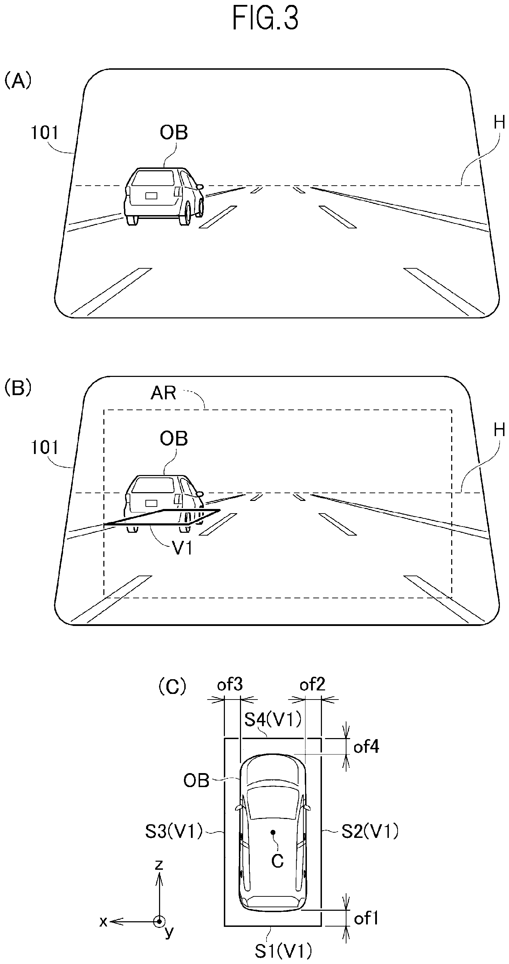

Fig. 3(A) shows an example of an object OB (actual scenery) recognized through the windshield 101. As shown in Fig. 3(A), a user, for example, a driver drives a vehicle on a three-lane road on one side with her or his own vehicle, and can recognize a vehicle ahead which runs on the left adjacent lane, for example. At this time, for example, the object information acquisition unit 310 in Fig. 1(A) can recognize the vehicle (vehicle ahead) as the object OB on the road existing in front of her or his own vehicle, and can acquire the position information of the recognized object OB (vehicle ahead).

Fig. 3(B) shows an example of the virtual image V1 (display element) superimposed on the object OB in Fig. 3(A). For example, the generation unit 230 in Fig. 1(A) can determine the position information of the display element corresponding to the virtual image V1, in accordance with the position information from the object information acquisition unit 310 and the viewpoint height of the driver from the viewpoint information acquisition unit 320, so that the virtual image V1 is overlapped with the object OB (vehicle ahead) at the viewpoint 102 of the driver. The virtual image V1 is provided on the virtual image display surface V which coincides with the virtual plane S in Fig. 1(B), for example.

Fig. 3(C) shows an explanatory diagram (plan view) of the planar shape of the virtual image V1 in the real space or the planar shape on the virtual plane S. For example, as shown in Fig. 1(B), when the virtual image display surface V coincides with the virtual plane S, the virtual image V1 in the real space is provided on the virtual plane S. Therefore, the planar shape of the virtual image V1 in the real space matches the planar shape on the virtual plane S in the real space. As shown in Fig. 3(C), the planar shape on the virtual plane S in the real space is, for example, a rectangle defined by first to fourth sides S1, S2, S3 and S4. In the example of Fig. 3(C), the center C of the planar shape (rectangle) on the virtual plane S coincides with the center of the object OB (vehicle ahead), for example, and the generation unit 230 can acquire or calculate the center of the object OB (vehicle ahead) based on information from the object information acquisition unit 310, for example.

In Fig. 3(C), the planar shape on the virtual plane S in the real space may be a shape that defines a cut surface by the virtual plane S that is a rectangular parallelepiped and surrounds the object OB (vehicle ahead) in the real space acquired by the object information acquisition unit 310 (The virtual plane S rises from the xz plane by a predetermined height when the road surface H is the xz plane.). In other words, when the object OB (vehicle ahead) is surrounded by a cuboid (virtual cuboid), among the three side lengths (the width (x-axis direction), the depth (z-axis direction) and the height (y-axis direction) of the object) that define the cuboid (virtual cuboid), the object information acquisition unit 310 may add a predetermined value (= of2 + of3) and a predetermined value (= of1 + of4) to the width and depth of the object OB (vehicle ahead), respectively. Alternatively, in Fig. 3(C), each of of1, of2, of3, and of4 may be set to zero, and the rectangle defined by the first to fourth sides S1, S2, S3 and S4 may exactly surround the object OB (vehicle ahead) in the planar view.

Note that the size of the object OB (vehicle ahead) may not be strictly acquired by the object information acquisition unit 310, and the object information acquisition unit 310 may recognize only the category of obstacle or approaching object (for example, "vehicle" or "pedestrian") to assign a respective fixed size to each category, and may assign a respective fixed size to each type in the category (for example, "ordinary automobile", "large truck", or "motorcycle" in the vehicle category).

When the virtual image V1 is provided on the virtual image display surface V' that does not coincide with the virtual plane S in Fig. 2(B), for example, the planar shape on the virtual plane S on which the planar shape of the virtual image V1 in the real space visually recognized by the user is mapped is the rectangle defined by the first to fourth sides S1, S2, S3 and S4 as shown in Fig. 3(C), for example.

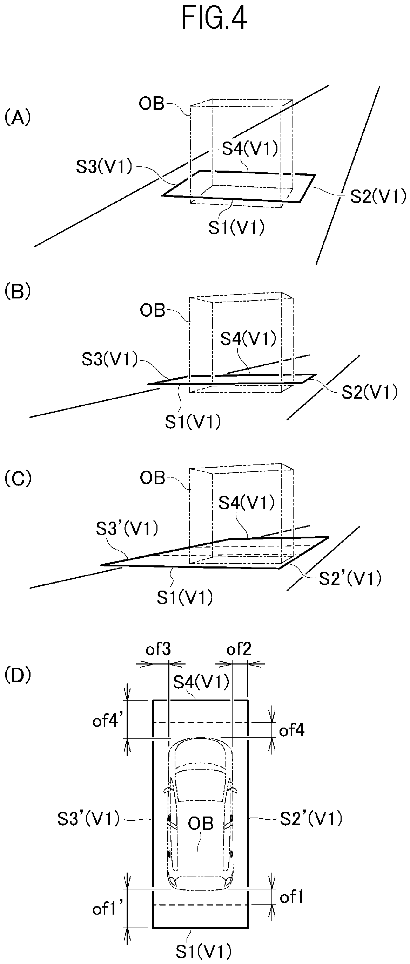

Fig. 4(A) shows an example of a virtual image V1 recognized by a user, Fig. 4(B) shows an example of a change in the size of the virtual image V1 visually recognized by the user when her or his viewpoint height becomes low, Fig. 4(C) shows an example of the virtual image V1 which is increased, and Fig. 4(D) shows an explanatory diagram (plan view) of the planar shape of the enlarged virtual image V1 in the real space or the planar shape on the virtual plane S.

In each of Figs. 4(A) to 4(C), the object OB (vehicle ahead) in Fig. 3(B) is simplified and represented as a rectangular parallelepiped (real rectangular parallelepiped) represented by the two-dot chain line. When the viewpoint height of the user becomes low from the height assumed in Fig. 4(A) to the height assumed in Fig. 4(B), the generation unit 230 determines the planar shape of the display element corresponding to the virtual image V1 such that the planar shape of the virtual image V1 in the real space visually recognized by the user or the planar shape on the virtual plane S on which the planar shape of the virtual image V1 is mapped remains the same. Therefore, when the planar shape on the virtual plane S in the real space is fixed or maintained by the rectangle defined by the first to fourth sides S1, S2, S3 and S4 (virtual rectangular parallelepiped), the inventors of the present invention have recognized that it is difficult for the user to visually recognize the virtual image V1, that is, the visibility decreases when the viewpoint height becomes low (see Fig. 4(B)).

Therefore, as shown in Figs. 4(A) and 4(B), the generation unit 230 according to the present invention temporarily determines the planar shape of the display element according to the viewpoint height of the user so that the change in the size of the display element (virtual image V1) superimposed on the planar shape (the rectangle defined by the first to fourth sides S1, S2, S3 and S4) on the virtual plane S surrounding the object OB (vehicle ahead) is equal to the change in the size of the object OB (vehicle ahead) (rectangular parallelepiped represented by the two-dot chain line). That is, the generation unit 230 temporarily determines the position and the appearance shape of the display element in the display image according to the viewpoint height of the user so that the relative positional relationship in the real space and the size relationship in the real space between the object OB (vehicle ahead) visually recognized by the user and the display element (virtual image V1) do not change, regardless of the viewpoint height of the user. Then, the generation unit 230 enlarges the planar shape of the display element that has been temporarily determined (see Figs. 4(C) and 4(D)).

As shown in Fig. 4(C) and Fig. 4(D), the planar shape on the virtual plane S in the real space is a rectangle defined by first to fourth sides S1, S2', S3', and S4 as an example. That is, the second side S2 in Fig. 4(B) is enlarged to the second side S2' in Fig. 4(C), and the third side S3 in Fig. 4(B) is enlarged to the third side S3' in Fig. 4(C). As described above, when the viewpoint height becomes low, the planar shape of the virtual image V1 in the real space visually recognized by the user or the planar shape on the virtual plane S on which the planar shape of the virtual image V1 is mapped extends in the front direction by (of4' - of4), and extends in the rear direction by (of1' - of1) (see Fig. 4(D)). As shown in Fig. 4(C), the generation unit 230 enlarges the planar shape of the display element that has been temporarily determined. Therefore, the size of the virtual image V1 of the display element (the rectangle defined by the first to fourth sides S1, S2', S3' and S4) increases by an amount of the enlargement, thereby being capable of improving the visibility.

The generation unit 230 can dynamically determine the planar shape (enlargement ratio) of the enlarged display element in response to a change in the viewpoint height of the user. When the viewpoint height of the user changes, the visibility can be improved in response to the change. However, when the change in viewpoint height is large, the improvement in visibility may be stopped. Specifically, the determination unit 220 determines whether the viewpoint height changes within a predetermined range within a predetermined period, and the generation unit 230 does not have to enlarge the planar shape of the display element that has been temporarily determined, when the amount of change in viewpoint height per unit time is greater than or equal to a reference value. Alternatively, when the amount of change in viewpoint height per unit time is greater than or equal to the reference value, the generation unit 230 may reduce the brightness for displaying the display element or turn off the display of the display element (virtual image V1) while enlarging the planar shape of the display element that has been temporarily determined. Then, when the change in viewpoint height becomes small, the generation unit 230 can resume the improvement in visibility. Stopping the improvement of the visibility when the change in the viewpoint height is large allows to avoid erroneous recognition that the distance between the object OB (vehicle ahead) and the vehicle (host vehicle) has changed or to avoid from presenting incorrect information to the driver.

On the other hand, the generation unit 230 does not need to respond to any change in the viewpoint height of the user. Specifically, the generation unit 230 can improve the visibility while driving the vehicle by the viewpoint height (fixed value) acquired at the time of starting the vehicle. In other words, for example, when a woman with a relatively low sitting height drives a vehicle, the visibility during driving the vehicle can be improved with the viewpoint height of the woman.

By the way, the generation unit 230 enlarges the planar shape of the display element that has been temporarily determined and recognized by the user when the viewpoint height becomes low. Therefore, the size of the virtual image V1 of the display element (the rectangle defined by the first to fourth sides S1, S2', S3' and S4) increases by an amount of the enlargement, thereby being capable of improving the visibility. However, the determination unit 220 can determine whether the line-of-sight direction of the driver acquired by the viewpoint information acquisition unit 320 is directed toward the display element (virtual image V1). That is, the generation unit 230 may stop the improvement of the visibility only when the line-of-sight direction of the driver is directed toward the display element (virtual image V1). By stopping the improvement in visibility, it is possible to avoid the erroneous presentation of information to the driver.

When the viewpoint height becomes low and the line-of-sight direction of the driver is not directed to the display element (virtual image V1), the generation unit 230 does not need to enlarge the virtual image V1.

In addition, when the planar shape of the display element (virtual image V1) is enlarged, that is, when the enlargement ratio is greater than 1, in order to improve the visibility, the generation unit 230 can notify the user that the planar shape of the display element (virtual image V1) is enlarged as the viewpoint height of the user decreases. As an example, the generation unit 230 can display a dedicated display element (not shown) in the display range AR indicating that the display element (virtual image V1) has been enlarged according to the viewpoint height of the user. Additionally or alternatively, the processing unit 210 can control a speaker (not shown) in the vehicle to output an audio indicating that the display element (virtual image V1) has been enlarged in accordance with the viewpoint height of the user. Thus, the user can distinguish between the enlargement of the virtual image V1 according to the viewpoint height of the user and the enlargement of the virtual image V1 according to the approach of the object OB (vehicle ahead).

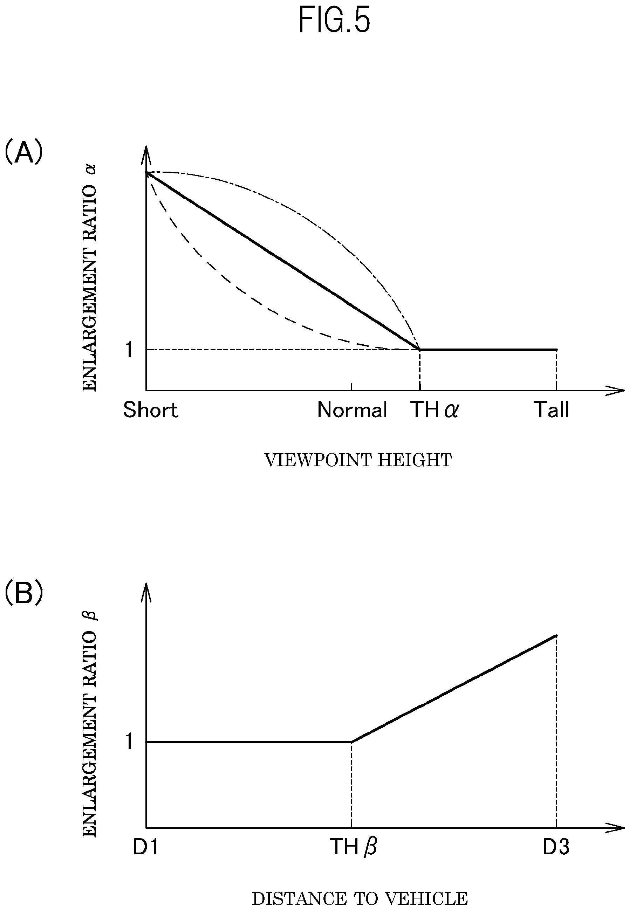

Fig. 5(A) shows a plurality of examples for setting the enlargement ratio of the planar shape of the virtual image V1 in the real space or the planar shape on the virtual plane S based on the viewpoint height of the user, and Fig. 5(B) shows an example for setting the enlargement ratio of the planar shape of the virtual image V1 in the real space or the planar shape on the virtual plane S based on the distance to the vehicle.

As shown in Fig. 5(A), the determination unit 220 preferably determines whether the viewpoint height of the user is lower than a reference position THa, and when the viewpoint height of the user is equal to or more than the reference position THa, the planar shape on the virtual plane S in the real space is fixed or maintained by the rectangle defined by the first to fourth sides S1, S2, S3 and S4, for example, as shown in Fig. 3(C). When the viewpoint height increases, the planar shape of the virtual image V1 in the real space visually recognized by the user or the planar shape on the virtual plane S on which the planar shape of the virtual image V1 is mapped remains the same. In other words, even though the planar shape of the virtual image V1 in the real space visually recognized by the user or the planar shape on the virtual plane S on which the planar shape of the virtual image V1 is mapped does not extend in the front and rear directions as shown in Fig. 4(D), the visibility in Fig. 4(A) does not decrease.

On the other hand, when the viewpoint height of the user is lower than the reference position THa, the enlargement ratio α (= S2' / S2) of the planar shape on the virtual plane S is increased as indicated by the solid line in Fig. 5(A). Note that "Tall" and "Short" in Fig. 5(A) indicate the maximum value and the minimum value of the viewpoint height of a driver who is the user assumed in the vehicle interior, respectively. "Normal" in Fig. 5(A) indicates the viewpoint height of an ideal driver. The enlargement ratio a may be determined by an alternate long and short dash line or a broken line other than the solid line in Fig. 5(A). The alternate long and short dash line can express the enlargement ratio a by an upwardly convex curve, which means that the visibility can be further improved when the viewpoint height becomes low.

Further, the generation unit 230 can use, for example, an enlargement ratio β shown in Fig. 5(B) to improve the visibility. That is, the generation unit 230 can determine the planar shape of the display element so that the planar shape on the virtual plane S is enlarged by multiplying the enlargement ratio a and the enlargement ratio β (the enlargement ratio α × the enlargement ratio β). In Fig. 5(B), when the distance between the object OB (vehicle ahead) and the vehicle (host vehicle) is larger than a threshold THβ, the enlargement ratio β larger than 1 can be set.

In Fig. 5(A) and Fig. 5(B), the minimum value of each of the enlargement ratio a and the minimum value of the enlargement ratio β is 1 or more, but may be set to be smaller than 1. In other words, when the minimum value of the enlargement ratio a and / or the enlargement ratio β is smaller than 1, it is acceptable to shrink on the basis of the enlargement ratio "1". In other words, on the basis of the minimum value which is smaller than 1, the planar shape on the virtual plane S is enlarged by the enlargement ratio "1".

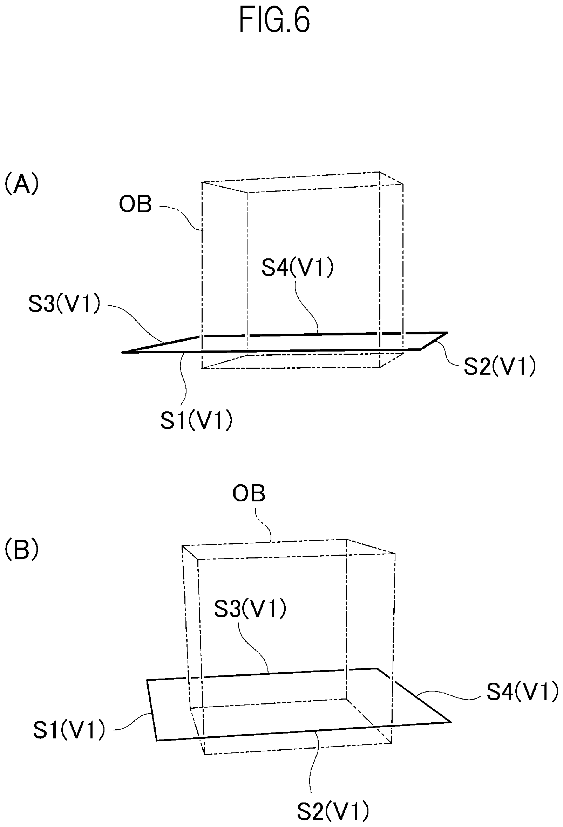

Fig. 6(A) shows an example of the virtual image V1 recognized by a user when her or his viewpoint height becomes low, and Fig. 6(B) shows an explanatory diagram of the planar shape of the virtual image V1 or the planar shape on the virtual plane S in Fig. 6(A) in the side view. Fig. 6(A) and Fig. 6(B) correspond to Fig. 4(B), in a situation where the planar shape on the virtual plane S in the real space is fixed or maintained by the rectangle defined by the first to fourth sides S1, S2, S3 and S4, for example, the present inventors have recognized that when the viewpoint height becomes low, it is difficult for the user to visually recognize the virtual image V1, that is, the visibility is lowered (see Fig. 6(A)).

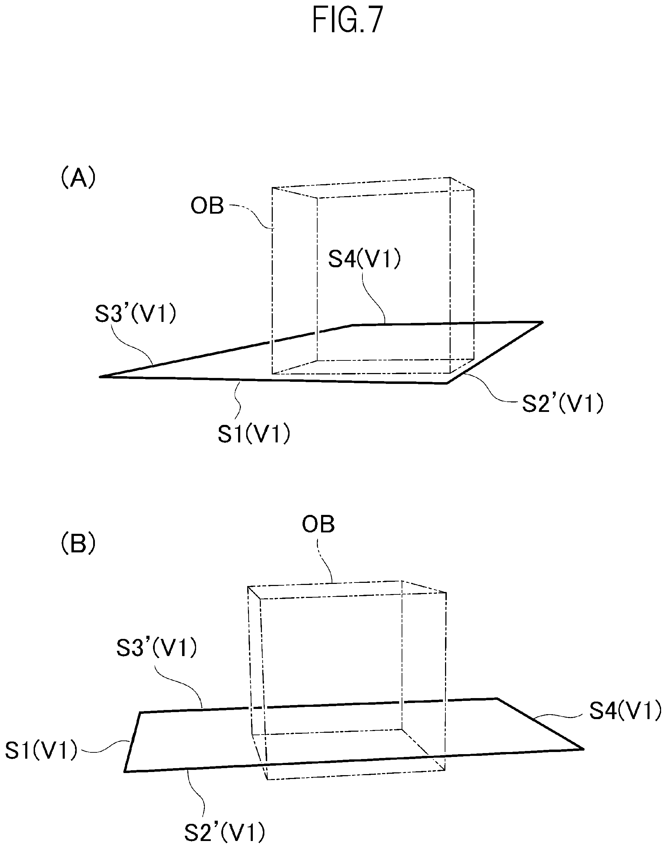

Fig. 7(A) shows an example of the enlarged virtual image V1 recognized by a user when her or his viewpoint height becomes low, and Fig. 7(B) shows an explanatory diagram of the planar shape of the virtual image V1 or the planar shape on the virtual plane S in Fig. 7(A) in the side view. Figs. 7(A) and 7(B) correspond to Fig. 4(C), and in a situation where the planar shape on the virtual plane S in the real space is enlarged by the rectangle defined by the first to fourth sides S1, S2', S3' and S4, for example, the present inventors have recognized the improvement in visibility when the viewpoint height becomes low (see Fig. 7(A)).

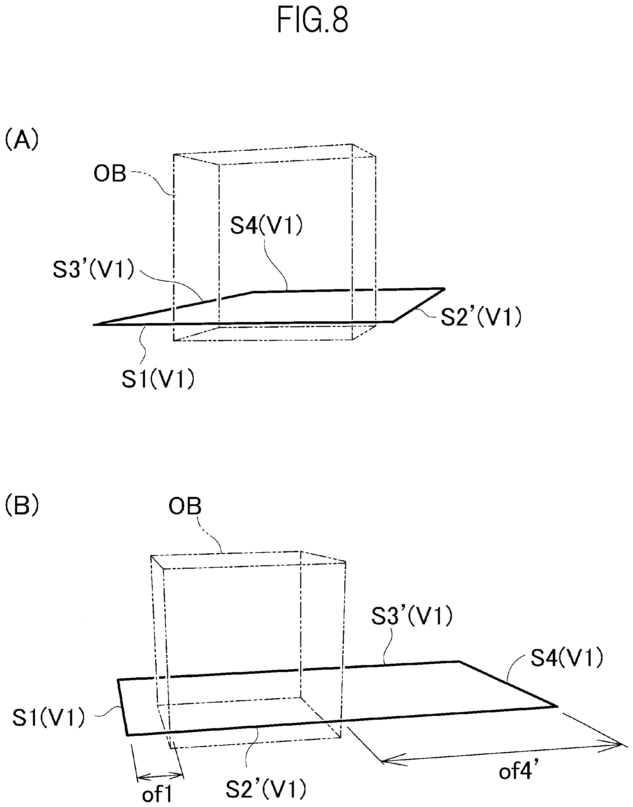

Fig. 8(A) shows a modification example of the virtual image V1 in Fig. 7(A), and Fig. 8(B) shows an explanatory view of the planar shape of the virtual image V1 or the planar shape on the virtual plane S in Fig. 8(A) in the side view. Even though the planar shape of the virtual image V1 in the real space visually recognized by the user or the planar shape on the virtual plane S on which the planar shape of the virtual image V1 is mapped extends in the front direction by (of4' - of4), the present inventors has recognized the improvement in visibility (see Fig. 8(A)).

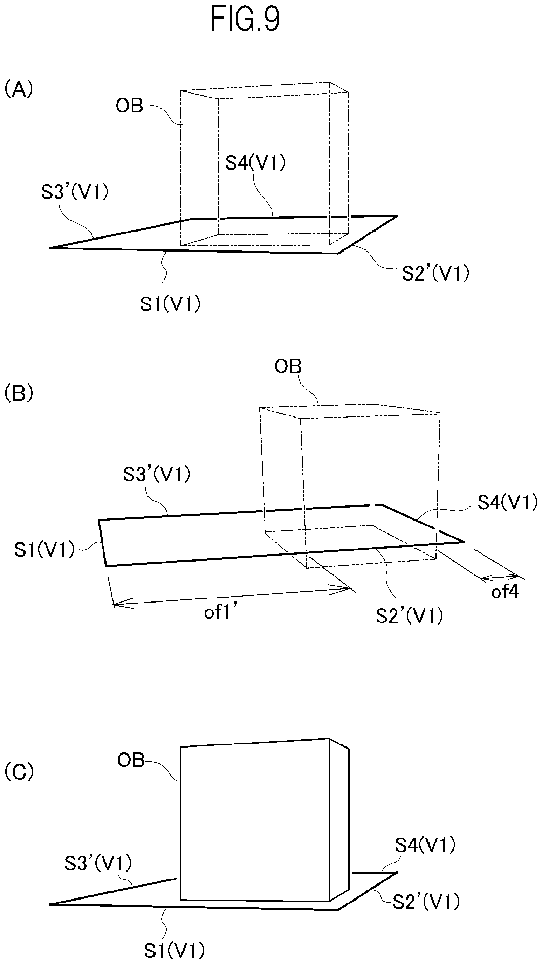

Figs. 9(A) and 9(C) show another modification example of the virtual image V1 in Fig. 7(A), and Fig. 9(B) shows an explanatory diagram of the planar shape of the virtual image V1 or the planar shape on the virtual plane S in Fig. 9(A) in the side view. Even though the planar shape of the virtual image V1 in the real space visually recognized by the user or the planar shape on the virtual plane S on which the planar shape of the virtual image V1 is mapped extends to the rear direction by (of1' - of1), the present inventors has recognized the improvement in visibility (see Fig. 9(A)). The generation unit 230 can determine the shape of the display element corresponding to the virtual image V1 so that the object OB (vehicle ahead) is given priority, and a part of the planar shape on the virtual plane S, that is, a part of the virtual image V1 behind the object OB (vehicle ahead) is omitted to maintain the visibility of the object OB (vehicle ahead) itself.

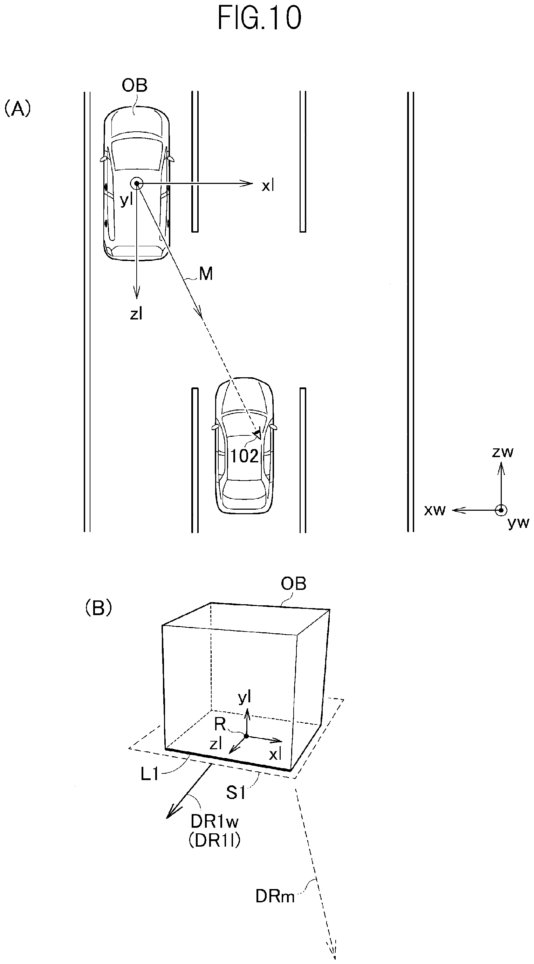

Fig. 10(A) is an explanatory diagram of the positional relationship between the object OB (vehicle ahead) and the host vehicle, and Fig. 10(B) is an explanatory diagram of a setting example of a predetermined direction (first predetermined direction). In the example of Fig. 10(A), the coordinates in the real space may be represented by the x_{w} axis, the y_{w} axis and the z_{w} axis, and may also be referred to as world coordinates. In the example of Fig. 10(B), the predetermined direction DR1_{w} is parallel to the z_{w} axis, and the first side S1 approaches the host vehicle when the first side S1 of the planar shape on the virtual plane S is enlarged in the predetermined direction DR1_{w}. In other words, when the forward direction of the host vehicle is the front direction and the backward direction of the host vehicle is the rear direction, the predetermined direction DR1_{w} (first predetermined direction) coincides with the backward direction of the host vehicle.

Although not shown, when the fourth side S4 of the planar shape on the virtual plane S is expanded in a direction opposite to the predetermined direction DR1_{w} (second predetermined direction: the forward direction of the host vehicle), the fourth side S4 moves away from the host vehicle.

The predetermined direction in the real space may be defined by local coordinates of the object OB (vehicle ahead) which may be represented by the x₁ axis, the y₁ axis, and the z₁ axis. Note that in Fig. 10(B), the boundary L1 between the object OB (vehicle ahead) and the road surface H is perpendicular to the z₁ axis, and the predetermined direction DR1₁ coincides with the predetermined direction DR1_{w}.

The predetermined direction DR1_{w} or DR1₁ is not limited to the backward direction of the host vehicle in Fig. 10(A) or the direction in which the first side S1 moves away from the boundary L1, and may be a direction in which the planar shape on the virtual plane S approaches the host vehicle. In Fig. 10(B), the predetermined direction DRₘ is represented by the dotted line, and the predetermined direction DRₘ can be set on a straight line (virtual straight line) connecting the center, for example, of the object OB (vehicle ahead) and the viewpoint 102 of the driver in the host vehicle in order to coincide with a direction M from a reference point R (for example, center, center of gravity) of the object OB (vehicle ahead) toward the viewpoint 102 of the driver in the host vehicle, for example. When the first side S1 is enlarged in a direction approaching the user (specifically, the viewpoint 102) in the host vehicle, the visibility can be effectively improved.

Alternatively, the predetermined direction DR1_{w} or DR1₁ or the predetermined direction DRₘ may be expanded in a direction to increase the gap or area on the virtual plane S where the planar shape of the virtual image V1 on the virtual plane S is defined by the boundary L1 between the object OB (vehicle ahead) and the road surface H, and the outer edge S1 of the planar shape of the virtual image V1 on the virtual plane S. When the viewpoint height becomes low, the gap on the virtual plane S (area on the virtual plane) can be increased, and the visibility can be further improved.

Further, when the object OB is an obstacle traveling toward the host vehicle, the predetermined direction DR1_{w} or DR1₁ or the predetermined direction DRₘ is set to the traveling direction of the object OB (obstacle), and the virtual image V1 may be enlarged.

Note that the direction in which the virtual image V1 is enlarged may include not only the first predetermined direction but also the opposite direction in the first predetermined direction (second predetermined direction). Alternatively, the direction in which the virtual image V1 is enlarged may be only the direction opposite to the first predetermined direction (second predetermined direction) instead of the first predetermined direction.

The present invention is not limited to the exemplary embodiments described above, and those skilled in the art will readily be able to modify the exemplary embodiments described above to the extent that they fall within the scope of the claims.

### DESCRIPTION OF REFERENCE NUMERALS

- 20: display
- 21: reflector
- 100: display mechanism
- 101: windshield
- 102: user (driver) viewpoint
- 103: imaging device
- 200: display controller (image processing unit in a broad sense)
- 210: processing unit
- 220: determination unit
- 230: generation unit
- 240: storage unit
- 300: image processor
- 310: object information acquisition unit
- 320: viewpoint information acquisition unit
- 400: information acquisition unit
- AR: display range
- DR1_{w}, DR1ₗ, DRₘ: predetermined direction
- L: display light
- H: road surface
- OB: object
- R: reference point
- V: virtual image display surface
- V1: virtual image

## Claims

1. An image processing unit comprising:
a generation unit configured to generate a display image including a display element corresponding to a virtual image visually recognized by a user,
wherein the generation unit determines a planar shape of the display element so that a size of the virtual image visually recognized by the user changes based on a viewpoint height of the user, and
wherein the generation unit determines the planar shape of the display element which is enlarged when the viewpoint height changes from a reference position to a position lower than the reference position.

2. The image processing unit according to claim 1,
wherein a forward direction of a vehicle including a projection target member on which the virtual image is projected is a front direction,
wherein a reverse direction of the vehicle is a rear direction, and wherein the generation unit determines the planar shape of the display element which is enlarged so that a planar shape of the virtual image in a real space visually recognized by the user or a planar shape on a virtual plane on which the planar shape of the virtual image is mapped extends in the front direction and / or the rear direction.

3. The image processing unit according to claim 1,
wherein the generation unit determines the planar shape of the display element which is enlarged so that a planar shape of the virtual image in a real space visually recognized by the user or a planar shape on a virtual plane on which the planar shape of the virtual image is mapped extends in a first predetermined direction and / or a second predetermined direction.

4. The image processing unit according to claim 3,
wherein the first predetermined direction is a direction in which the planar shape of the virtual image in the real space visually recognized by the user or the planar shape on the virtual plane on which the planar shape of the virtual image is mapped approaches a vehicle including a projection target member on which the virtual image is projected, and
wherein the second predetermined direction is a direction in which the planar shape of the virtual image in the real space visually recognized by the user or the planar shape on the virtual plane on which the planar shape of the virtual image is mapped moves away from the vehicle.

5. The image processing unit according to any one of claims 1 to 4, wherein the generation unit dynamically determines an enlargement ratio of the planar shape of the display element responsive to a change in the viewpoint height.

6. The image processing unit according to claim 5,
wherein the generation unit has less brightness of the display or disables the display of the planar shape of the display element which is enlarged when an amount of the change in the viewpoint height per unit time is greater than or equal to a reference value.

7. The image processing unit according to claim 5 or 6,
wherein the generation unit determines the planar shape of the display element that is not enlarged so that the enlargement ratio of the planar shape of the display element is 1 only when a line-of-sight direction of the user is directed toward the virtual image.

8. The image processing unit according to any one of claims 5 to 7, wherein the user is informed that the enlargement ratio has occurred as the viewpoint height of the user decreases when the enlargement ratio of the planar shape of the display element is greater than 1.

9. The image processing unit according to any one of claims 1 to 4, wherein the viewpoint height is a fixed value acquired when the vehicle is started, and
wherein the generation unit determines an enlargement ratio of the planar shape of the display element based on the fixed value.

10. The image processing unit according to any one of claims 1 to 9, wherein the generation unit determines the planar shape of the display element so that the planar shape of the virtual image in the real space visually recognized by the user or the planar shape on the virtual plane on which the planar shape of the virtual image is mapped remains the same when the viewpoint height changes from the reference position to a position higher than the reference position.

11. A head-up display device comprising:
the image processing unit according to any one of claims 1 to 10; and
a display configured to display the display image generated by the image processing unit.
